Europäisches Patentamt

(19) **European Patent Office**

Office européen des brevets

(11) Publication number: **0 229 855
B1**

# EUROPEAN PATENT SPECIFICATION

(12)

(45) Date of publication of the patent specification:
18.07.90

(21) Application number: **85201976.9**

(22) Date of filing: **26.11.85**

(51) Int. Cl.⁵: **F02K 1/36,** F02K 1/38, F02K 1/46

(54) Fixed-geometry silencer for a jet engine.

<table>
<tr><td>(43) Date of publication of application:<br>**29.07.87 Bulletin 87/31**</td><td rowspan="4">(73) Proprietor: **THE BOEING COMPANY, P.O. Box 3707 Mail Stop 7E-25, Seattle Washington 98124(US)**<br><br>(72) Inventor: **Johnson, Joseph M., 15011 117th Pl. N.E., Bothell, WA. 98011(US)**<br>Inventor: **Thornock, Russell L., 6208 Kirkwood Pl. N., Seattle, WA. 98103(US)**<br><br>(74) Representative: **Hoijtink, Reinoud et al, OCTROOIBUREAU ARNOLD & SIEDSMA Sweelinckplein 1, NL-2517 GK Den Haag(NL)**</td></tr>
<tr><td>(45) Publication of the grant of the patent:<br>**18.07.90 Bulletin 90/29**</td></tr>
<tr><td>(84) Designated Contracting States:<br>**DE FR GB IT NL**</td></tr>
<tr><td>(56) References cited:<br>**FR-A- 1 436 411<br>GB-A- 862 560<br>GB-A- 1 451 783<br>GB-A- 2 084 659<br>US-A- 3 053 340<br>US-A- 3 187 501<br>US-A- 3 402 894<br>US-A- 3 613 826<br>US-A- 3 710 890<br>US-A- 3 820 630**</td></tr>
</table>

## Description

This invention relates to jet noise suppressors in convergent jet engine nozzles and particularly, for jet noise suppression structure and method in which there are no moving parts.

Noise suppression for jet engines in aircraft is required during a very small period of the flight, namely, at takeoff.

Jet noise suppression devices, however, have to be carried with their thrust and drag penalties throughout the entire flight, whereby sometimes severe economic costs are imposed for the noise benefit provided only at takeoff.

A viable noise suppressor, therefore, will have low thrust and drag penalties as well as a reliable design. In the prior art (GB-A 862 560) some jet noise suppressors have been comprised of tubular means for internally ventilating the exhaust flow. These suppressors entrain ambient air that is mixed with the gas exhaust from the engine near the downstream end of the nozzle. Generally such noise suppressors produce both the desired takeoff noise suppression and undesirable drag penalties during cruise flight. In these suppressors, the entrained air flow is drawn through external inlets into vent tube struts or ducts within the nozzle.

Internal ventilation is an entraining process by which the lower velocity ventilating airflow is drawn into and mixes with the high velocity engine exhaust which surrounds it near or at the downstream end of the nozzle. The amount of flow which is entrained is dependent, all other conditions being held constant, on the length of the mixing or entrainment region downstream of the vent tube the longer the length of the region the more flow being entrained.

For example, for the maximum entrainment at takeoff a divergent tube end is the most desirable configuration. When the most desirable configuration for takeoff has been determined, the problem arises of reconciling it with the need for low drag characteristics in cruise flight. The general rule is that the more flow entrained during cruise flight, the more drag penalty exists. It is consequently desirable to eliminate or at least minimize the amount of flow entrained in cruise flight.

Configurations have been examined which have moving part to permit a flow of entrained air at takeoff and to shut it off in cruise flight. However, any moving parts in an engine exhaust system represent a large decrease in reliability relative to a system with no moving parts. This translates directly to an economic penalty, that is, added maintenance costs.

According to the invention a noise suppressor meeting the objectives of producing the desired takeoff noise suppression and minimizing the undesirable drag during cruise flight, are obtained without moving parts in the engine exhaust system, by the measures of the characterizing part of claim 1.

A unique feature of the invention is the location of the downstream end or exit of the internally ventilating tube or tubes of the noise suppressor, with respect to the nozzle exit, to produce the desired results. Previous internally ventilated nozzles had vent exits arbitrarily placed at the nozzle exit plane, or when efforts had been made to maximize the amount of entrained mass flow at takeoff, the ventilating tube exits were downstream of the nozzle and mechanical means had to be employed to shut off the entrained flow at cruise.

Between takeoff and cruise flight, the nozzle pressure ratio of a typical engine for which jet noise suppression is desirable changes from approximately 2.0 to about 3.0. Nozzle pressure ratio is the total pressure of the flow in the nozzle divided by the static pressure in the environment to which the nozzle exhausts. It should be noted that for nozzle pressure ratios greater than 1.89 the Mach numbers within the nozzle are constant and specifically, the Mach number at the nozzle exit is 1.0 and remains so for all pressure ratios greater than 1.89. Outside of the nozzle, the flow speeds up and the Mach numbers increase with increasing nozzle pressure ratios.

Considering the gas exhaust flow at the internally ventilating tube exits, for exit edge Mach numbers less than 1.0, there is no turning of the flow as it moves past the edge. However, if the edge Mach number is 1.0 and the nozzle pressure ratio is about 3.0, the exhaust flow turns by 7.7 degrees toward the vent tube center line. Thus, the turning of the gas exhaust at the vent tube exit toward the axis of the airflow therefrom greatly reduces the length of the entrainment region and therefore the amount of entrained air, compared with the amount of entrainment at the expected nozzle pressure ratio of 2.0 for takeoff, where the amount of flow turning would be much less.

It has been found, according to the invention, in an internally ventilated convergent nozzle that the vent tube exit or exits should be located at the nozzle sonic surface. The nozzle sonic surface is the locus of all points in the nozzle flow at which the nozzle flow equals the velocity of sound.

Then, within a certain range of placements, at nozzle pressure ratios near 2.0 for takeoff, there is airflow entrained through the vent to produce significant noise suppression, and near 3.0 for cruise flight, the airflow through the internally ventilating noise suppressor is greatly reduced or shut off. It has been further found, according to the invention, that the mechanism for shutting off this airflow is the sudden expansion of the nozzle gas exhaust flow at the vent exit to produce the turning of this flow toward the vent center line and a resulting closing off of the entrained air in the vent.

It should be noted that the nozzle sonic surface will remain attached to the vent exit for a range of locations adjacent the nozzle exit, both upstream and downstream thereof. Thus, the invention includes the ventilating tube exit (or exits) being effective at takeoff and at cruise flight in a range of locations adjacent the exhaust nozzle and where the nozzle sonic surface intersects all or part of the periphery of the vent exit. Because differently shaped convergent nozzles have differently shaped sonic surfaces, it should be recognized that there is no specific geometric definition that can be given without first specifying the nozzle shape. It is not the intent of this invention to specify the convergent nozzle shape.

It is not intended to limit the shape of the vent tube or tubes to a cylindrical one. Variations from cylindrical will result in variations of entrained mass air flow for given exit sizes and locations. A divergent exit shape will result in more entrained flow than a cylindrical one and, accordingly, a convergent exit will result in less flow. Both the vent exit location and shape are chosen to produce the desired overall entrainment characteristics in the design process. The tube exit location is first chosen in order to approximately obtain the desired entrainment curve for nozzle pressure ratios between about 1.0 and 3.0; and then the vent exit shape is chosen to closely determine the desired entrainment rate.

Because the nozzle and noise suppressor are designed to produce or entirely eliminate entrained air flow at cruise flight and because low drag at cruise flight is highly desirable, special attention is given to the ambient air inlet. An aerodynamically ideal solution would be an inlet, open at takeoff but closed at cruise flight; but, this would involve moving parts, the feature that the present invention specifically avoids. Thus, according to the invention, a fixed geometry inlet having low drag at the low cruise air mass flow rates is desired. Such an inlet, according to the invention, is comprised of a porous surface made up of circular-shaped louvers, having their downstream edges depressed below the upstream so as to provide a minimum drag for the inlet at cruise flight. Such an inlet produces comparatively little drag at takeoff conditions because of the low speed involved.

## Brief Description of the Drawings

Referring to the accompanying drawings which are for illustrative purposes:

Fig. 1 is a cross-sectional view of a prior art internally ventilated jet engine nozzle, having a centrally positioned mechanically actuated plug open in the takeoff position;

Fig. 2 is a cross-sectional view of the prior art internally ventilated nozzle shown in Fig. 1 with the plug in the closed position for cruise flight;

Fig. 3 is a pictorial view of an internally ventilated convergent nozzle having a vent tube with a divergent exit;

Fig. 4 is a cross-sectional view of the nozzle and vent tube shown in Fig. 3, operating at takeoff for noise suppression;

Fig. 5 is a cross-sectional view of the nozzle in Fig. 4, illustrating the shut off of the ambient air entrainment during cruise flight;

Fig. 6 is a schematic view illustrating four positions of an exit tube of a noise suppressor adjacent the downstream end of a nozzle and showing the position of nozzle sonic surface relating to the tube positions;

Fig. 7 is a graph of entrained weight flow vs. nozzle pressure ratios, between pressure ratios of 1.0 and 3.0 for the four ventilating tube positions shown in Fig. 6;

Fig. 8 is a pictorial view of a convergent nozzle having a three tube noise suppressor with convergent exits;

Fig. 9 is an end view of the nozzle and noise suppressor shown in Fig. 8;

Fig. 10 is a pictorial view of a convergent jet engine nozzle having a noise suppressor divided in three parts;

Fig. 11 is an end view of the nozzle shown in Fig. 10;

Fig. 12 is a plan view of a porous noise suppressor inlet extending along an outer wall of a nozzle;

Fig. 13 is a plan view of one of the small openings of the inlet in Fig. 12; and

Fig. 14 is a cross-sectional view along the line 14-14 in Fig. 13.

## Best Mode For Carrying Out The Invention

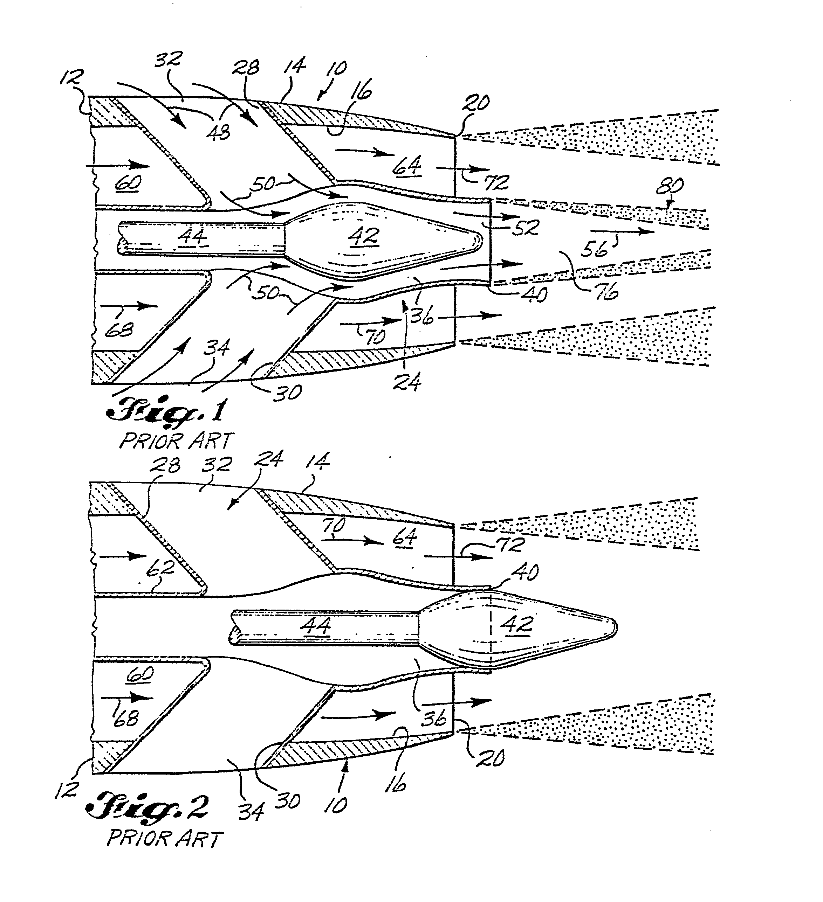

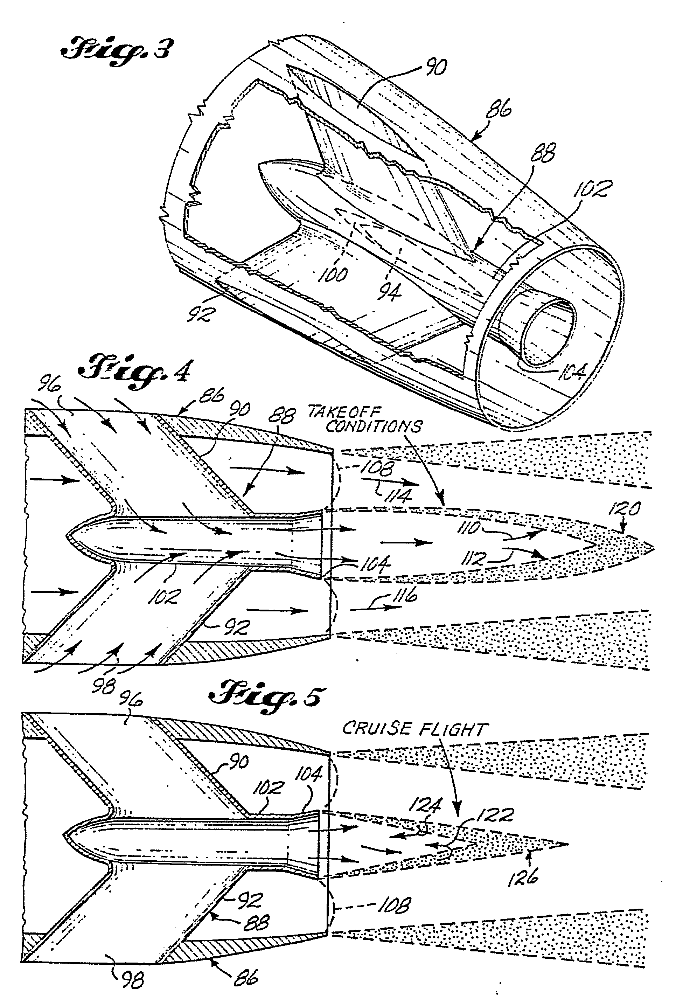

Referring again to the drawings, there is shown in Figs. 1 and 2 a convergent nozzle 10 for a jet aircraft engine, not shown, adapted to have its upstream end 12 secured to the jet engine. The nozzle has outer converging wall 14 and inner converging wall 16, terminating in a downstream exhaust end 20 from which a propulsive gas jet issues.

Within the nozzle there is a plenum chamber and vent tube, generally designated as 24. The plenum and vent is supported by a plurality of hollow struts 28 and 30. Typically, there are three. Each of the struts extends through the nozzle wall structure and has an ambient air inlet, as 32 and 34. The inlets are connected through the hollow struts to a internal vent or duct means 36. The duct 36 is of slightly irregular but generally cylindrical configuration, having a cylindrical downstream end 40. The configuration of the duct 36 upstream of the end 40 is designed to accommodate a central plug 42, supported on a shaft 44 which is actuated by means not shown to move the plug 42 from its open position, shown in Fig. 1, to a closed position in Fig. 2, where the large diameter surface of the plug seats on the internal surface of the end 40 to seal off the vent tube 24.

The vent tube 24 is designed to entrain ambient air during takeoff, the air flowing in the directions of the arrows 48, 50, 52 and 56. Because of the plug 42, the nozzle has a somewhat closed central portion, particularly as shown in Fig. 2, and an annulus 60 is formed around tubular member 62 which encloses the rod. A smaller annulus 64 surrounds the duct 36 . The gas exhaust from an engine flows through the annulus 60, as indicated by the arrows 68, around the hollow struts and as further indicated, by the arrows 70 into the annulus 64, the arrows 72 indicating the formation of the exhaust jet externally of the downstream end of the nozzle.

The vent tube 24 causes a substantial amount of air to be entrained through the inlets and into the area 76 surrounded by the exhaust jet. The air from the area 76 mixes with the exhaust jet in a mixing region indicated at 80 which reduces the jet noise produced at takeoff. If this same flow were allowed to continue during cruise flight, it would produce a large amount of drag to reduce the effectiveness of the jet, and thus, become an economic problem because of excessive demands of fuel. This was recognized in the prior art and resulted in the use of a central plug such as 42 to stop the flow of entrained air during cruise flight when there is no demand for noise reduction. However, movable parts such as the actuating means of the rod 44 and the plug 42 within the hot high speed nozzle exhaust greatly reduce the durability of the exhaust system and thus increase the maintenance cost associated with its use.

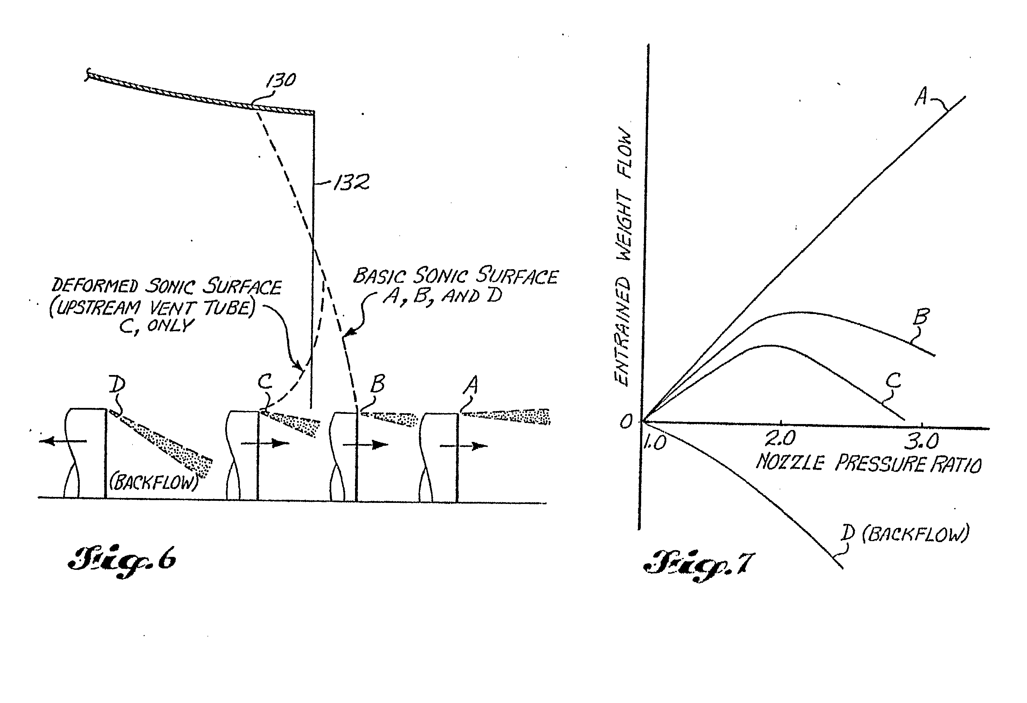

In Figs. 3-5, there is shown a jet aircraft convergent nozzle 86 having a fixed vent tube, generally designated as 88, the nozzle and tube form a noise suppressor characterized as having no moving parts. This type of noise suppressor permits a generally open hollow nozzle by the elimination of the movable plug shown in Figs. 1 and 2. The vent tube system or duct means is formed in part of hollow struts 90, 92 and 94.

Here the hollow struts extend through and are connected to the walls of the nozzle at the ambient air inlets 96, 98, and 100 to form a part of the vent or duct means along with the struts and the centrally positioned tube 102. The tube 102 is supported in position by the struts and has a generally cylindrical configuration except at the downstream end 104 where it is divergent to provide a greater entrained air flow than if the end were cylindrical or convergent. The end is positioned upstream of the nozzle exit. That location is selected with respect to obtaining the desired entrainment characteristics, and then the exit shape is selected to obtain the desired flow rate as closely as possible. To achieve the desired results for takeoff and cruise flight the vent or duct means exit 104 must be located at the nozzle sonic surface 108 where the exhaust gas exit Mach number is 1.0.

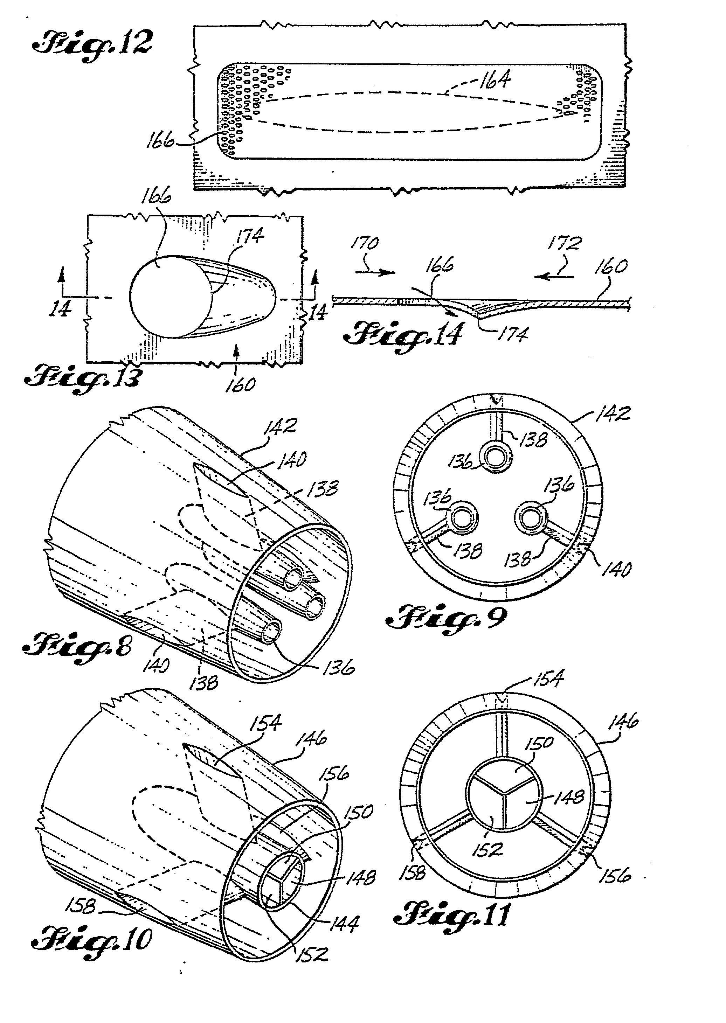

During takeoff where the nozzle pressure ratio is about 2.0, there is substantial air entrainment through the inlets 96, 98 and 100 into the central tube 102, and discharged at the end 104, Fig. 4, where the arrows 110 and 112 indicate that the entrained flow continues to move in a downstream direction as it merges with the propulsive jet from the engine indicated by the arrows 114 and 116. The long length of the entrainment region 120 provides for a substantial amount of entrained air to mix with the exhaust jet in order to produce a significant noise reduction at takeoff.

During cruise flight, Fig. 5, where noise suppression is not important and the nozzle pressure ratio is raised to 3.0, the air flow through the noise suppressor is substantially reduced or shut off. This is indicated by the shorter mixing region 126 and the reverse flow arrows 122 and 124. The mechanism for shutting off the air flow is the sudden expansion of the nozzle flow at the vent exit, resulting from the increased nozzle pressure ratio, which produces a turning of the exhaust gas toward the vent center line or axis with a resulting shortening of the entrainment region. Besides this a reverse flow shown by arrows 122 and 124 may occur, reducing the net amount of flow entrained. This reduces or eliminates the drag resulting from the entrained flow as it is eliminated by the plug in Fig. 2.

In Fig. 6, an internally ventilated nozzle 130 having a downstream end 132 is shown fragmentarily to illustrate the effect of axial locations of the exit of the internal vent duct. The relationship between the entrained weight flow and the nozzle pressure ratios for each of the four locations in Fig. 6 is diagrammed in Fig. 7.

The basic nozzle sonic surface for vent positions A, B and D for the nozzle and for the locations of the exit are shown, vent B being located at the nozzle sonic surface. That is, the vent exit at B is in a proper position to function to entrain an adequate amount of air for noise suppression and also to shut off air flow during cruise flight.

The position for the vent at C is upstream of the basic nozzle sonic surface and of the nozzle exhaust but the sonic surface remains attached to the vent, although it is deformed. The position at C is effective to function within the requirements of the invention.

The locations of the exits at A and D are out of the range of placement where they would be satisfactory for both adequate air entrainment for noise suppression and suitable to greatly reduce or shut off the flow during cruise flight. That is, the downstream location of the vent exit A could be chosen if the only consideration were maximinizing the entrained flow for noise suppression. With the vent exit at this location, the entrainment constantly increases with the increasing nozzle pressure ratio in the region of interest between 1.0 and 3.0, Fig. 7. Curve A in Fig. 7 would peak at some pressure ratio greater than 3 and then fall off at still higher values and thus, would not be suitable for shutoff of the entrained air at cruise flight.

Generally, the entrainment-nozzle pressure ratio relationship will occur as a peaked curve with the peak being at lower pressure ratios for increasingly upstream locations of the vent tube exit. For the peak to occur near takeoff conditions, 2.0, the vent exit must be located at the sonic surface of the nozzle, this surface being the locus of all points in the nozzle flow at which the nozzle flow equals the velocity of sound.

In the position at D, the sonic surface is no longer attached to the vent exit and has nearly resumed its original shape. The result is a back flow of the exhaust gas into the vent exit and out of the inlet. This is a situation not within the scope of the invention.

To be within the scope of the invention the ventilated nozzle must have its vent exit or exits adjacent the nozzle exhaust such that the nozzle sonic surface intersects all or part of the periphery of the vent exit. Because differently shaped convergent nozzles have differently shaped sonic surfaces, there is no specific geometric definition that can be given for the vent, the vent exit location, and the sonic surface without first specifying the nozzle shape.

The exit ends of the internally ventilating tubes or duct means are not limited to cylindrical shapes, shown in Fig. 6 or the divergent exit in Figs. 3-5. They may also be convergent as shown in Figs. 8 and 9. Here each of the convergent ventilating tubes 136 have one supporting hollow strut 138 with an inlet 140 extending through nozzle wall 142. In this embodiment the nozzle sonic surface intersects all or part of the periphery of each of the vent exits 136.

In Figs. 10 and 11 there is another embodiment having a single cylindrical ventilating tube 144 within a convergent nozzle 146. Within the tube 144 there are three separate ventilating ducts 148, 150 and 152. Each separate duct has its own inlet and supporting hollow strut 154, 156 and 158.

A divergent exit shape results in more entrained air than a cylindrical one and a convergent exit results in less entrained air. Both the exit location and shape are chosen to produce the desired overall entrainment characteristics. In the design process the tube exit location is first chosen in order to obtain approximately the desired entrainment curve, as B and C in Fig. 7, and then the vent exit shape is chosen to more closely determine the desired entrainment rate.

Because the nozzle and noise suppressor combination is designed to reduce or entirely eliminate entrained flow at cruise flight, and because low drag on the nozzle wall is highly desirable, the ambient air inlets have been conceived with the foregoing under consideration. The aerodynamically ideal solution would be an inlet, open at takeoff but closed at cruise, but this would involve moving parts which the invention specifically avoids.

An ambient air inlet 160, extending along an outer nozzle wall 162, Figs. 12-14, is proposed according to the invention. The inlet externally of a hollow strut 164 is comprised of a multiplicity of holes to form a porous surface. Each hole 166 is shaped generally in the form of a circular louver. As shown in Fig. 14, the arrow 170 indicates the direction of the air flow and the arrow 172 is the direction of the aircraft. The upstream end of the louver is at the level of the plate 160 and a portion of the downstream edge 174 is depressed below the external surface of the plate 160. This results in a minimum drag for the louver at cruise flight. At takeoff, the inlet will produce comparatively little drag because of the lower speed involved.

## Claims

1. A convergent jet engine aircraft noise suppressor nozzle (86) adapted to exhaust a propulsive gas jet, said nozzle having wall means longitudinally bounding a substantially open portion, said wall means bounding said portion converging toward a downstream exhaust end, vent means (88) for supplying ambient air through the inside of said nozzle so as to reduce the noise produced by said gas jet during takeoff, said vent means including duct means (90, 92, 94, 102) for entraining said air through said wall means, into said nozzle, and to a position associated with the nozzle downstream end to mix with the gas exhaust at takeoff, said duct means having upstream inlet (96, 98, 100) and downstream outlet ends, said duct means being open upstream to entrain the ambient air during takeoff and being connected into said wall means for entraining said air during takeoff downstream out of said duct means to mix with the jet forming gas exhaust; characterized in that said duct means being positioned with the outlet end (104) adjacent the nozzle exhaust such that the nozzle sonic surface (108) intersects all or part of the periphery of the outlet (104) and the entrained ambient air flow (110, 112) is substantially at a maximum for a nozzle pressure ratio representative for take off conditions and the entrained ambient air flow (122, 124) is substantially restricted or is shut off entirely for a nozzle pressure ratio representative for cruise conditions.

2. The invention according to claim 1 in which: said nozzle (86) and duct means (102) association is such that between takeoff and cruise the nozzle pressure ratio changes from approximately 2.0 to about 3.0, respectively.

3. The invention according to claim 1 in which: said duct means terminate downstream so as to end at the nozzle sonic surface (108) or at a deformed version thereof.

4. The invention according to claim 1 in which: said duct means (102) terminate downstream in a position in said association, where at a nozzle pressure ration of about 2.0, there is sufficient ambient air flow (110–112) out of the duct means (102) downstream so as to produce significant jet engine noise suppression; and at a nozzle pressure ratio of about 3.0, the ambient air flow into the duct means is greatly reduced or shut off.

5. The invention according to claim 1 in which: said duct means (102) terminate downstream so as to end with respect to the nozzle (86) so that the nozzle sonic surface (108) intersects all or part of the periphery of the ambient air exit of the duct means.

6. The invention according to claim 5 in which: the periphery of the end of the duct means at which the ambient air is exited is of a shape selected from one of the group consisting of cylindrical, divergent, and convergent.

7. The invention according to claim 1 in which: the upstream open ends of the duct means are formed of a porous surface having multiple small openings (166), said porous surface extending along the periphery of the outer wall surface (160) of the nozzle.

8. The invention according to claim 7 in which: the openings are louvers (166) of which downstream end (174) portions are depressed inwardly of the outer wall surface to provide minimum drag at the opening during cruise flight.

## Revendications

1. Tuyère convergente (86) de réduction de bruit pour réacteur d'aéronef, destinée à projeter un jet de gaz de propulsion, la tuyère ayant une paroi délimitant longitudinalement une partie sensiblement ouverte, la paroi qui délimite cette partie convergeant vers une extrémité aval d'échappement, un dispositif évent (88) destiné à transmettre de l'air ambiant à l'intérieur de la tuyère afin que le bruit produit par le jet de gaz soit réduit au décollage, le dispositif évent comportant un conduit (90, 92, 94, 102) d'entraînement d'air à travers la paroi, vers l'intérieur de la tuyère, et vers une position associée à l'extrémité aval de la tuyère afin qu'il se mélange aux gaz d'échappement lors du décollage, le conduit ayant des extrémités amont d'entrée (96, 98, 100) et aval de sortie, le conduit étant ouvert vers l'amont afin que l'air ambiant soit entraîné pendant le décollage et étant raccordé à la paroi afin que l'air entraîné au décollage soit évacué en aval du conduit et se mélange aux gaz d'échappement formant le jet, caractérisée en ce que le conduit est placé de manière que l'extrémité de sortie (104) soit adjacente à l'échappement de la tuyère d'une manière telle que la surface sonique (108) de la tuyère recoupe la totalité ou une partie de la périphérie de la sortie (104), et le débit d'air ambiant entraîné (110, 112) est pratiquement maximal pour un rapport des pressions à la tuyère qui est représentatif des conditions de décollage et le débit d'air ambiant entraîné (122, 124) est notablement limité ou même totalement supprimé pour un rapport des pressions à la tuyère qui est représentatif des conditions de vol de croisière.

2. Invention selon la revendication 1, dans laquelle l'association de la tuyère (86) et du conduit (102) est telle que le rapport des pressions à la tuyère varie d'environ 2,0 à environ 3,0 entre le décollage et le vol de croisière.

3. Invention selon la revendication 1, dans laquelle le conduit aboutit en aval de manière qu'il se termine au niveau de la surface sonique (108) de la tuyère ou au niveau d'une version déformée de cette surface.

4. Invention selon la revendication 1, dans laquelle le conduit (102) se termine en aval à un emplacement de l'association auquel, pour un rapport des pressions à la tuyère d'environ 2,0, le courant d'air ambiant (110–112) transmis par le conduit (102) en aval soit suffisant pour qu'il assure une réduction significative du bruit du réacteur, et, pour un rapport des pressions à la tuyère d'environ 3,0, le courant d'air ambiant transmis au conduit est nettement réduit ou annulé.

5. Invention selon la revendication 1, dans laquelle le conduit (102) se termine en aval afin qu'il aboutisse, par rapport à la tuyère (86) à un emplacement tel que la surface sonique (108) de la tuyère recoupe la totalité ou une partie de la périphérie de la sortie d'air ambiant du conduit.

6. Invention selon la revendication 5, dans laquelle la périphérie de l'extrémité du conduit à laquelle l'air ambiant sort a une configuration choisie dans le groupe comprenant les configurations cylindriques, divergentes et convergentes.

7. Invention selon la revendication 1, dans laquelle les extrémités amont ouvertes du conduit sont formées par une surface poreuse ayant de nombreux petites ouvertures (166), la surface poreuse étant disposée le long de la périphérie de la surface externe de la paroi (160) de la tuyère.

8. Invention selon la revendication 7, dans laquelle les ouvertures sont formées par des orifices d'aérage (166) dont les parties d'extrémité aval (174) sont enfoncées vers l'intérieur de la surface externe de la paroi afin que la traînée au niveau de l'ouverture soit minimale en vol de croisière.

## Patentansprüche

1. Konvergente Strahltriebwerks-Flugzeuggeräuschunterdrückerdüse (86), die dazu geeignet ist, einen Vortriebsgasstrahl auszustoßen, wobei diese Düse eine Wandeinrichtung hat, welche einen im wesentlichen offenen Teil longitudinal begrenzt, wobei die Wandeinrichtung den erwähnten Teil, der nach einem stromabwärtigen Ausstoßende zu konvergiert, begrenzt, eine Belüftungseinrichtung (88) zum Zuführen von Umgebungsluft durch das Innere der Düse so, daß das Geräusch, welches durch den erwähnten Gasstrahl während des Startens erzeugt wird, vermindert wird, wobei die Belüftungseinrichtung Kanalmittel (90, 92, 94, 102) zum Mitreißen der Luft durch die Wandeinrichtung, in die Düse und zu einer dem stromabwärtigen Ende der Düse zugeordneten Position zum Mischen mit dem Gasausstoß beim Starten aufweist, wobei die Kanalmittel stromaufwärtige Einlaß- (96, 98, 100) und stromabwärtige Auslaßenden haben, wobei die Kanalmittel zum Mitreißen der Umgebungsluft während des Startens stromaufwärts offen und in die Wandeinrichtung zum Mitsichfortführen der Luft während des Startens stromabwärts aus der Kanaleinrichtung zum Mischen mit dem den Strahl bildenden Gasausstoß verbunden sind; dadurch gekennzeichnet, daß die Kanalmittel mit dem Auslaßende (104) benachbart dem Düsenausstoß derart positioniert sind, daß die Düsenschalloberfläche (108) die Gesamtheit oder einen Teil des Umfangs des Auslasses (104) schneidet und die mitgerissene Umgebungsluftströmung (110, 112) im wesentlichen auf einem Maximum für ein Düsendruckverhältnis ist, das für die Startbedingungen repräsentativ ist, und die mitgerissene Umgebungsluftströmung (122, 124) für ein Düsendruckverhältnis, das für Reiseflugbedingungen repräsentativ ist, wesentlich beschränkt oder vollständig abgestellt ist.

2. Die Erfindung nach Anspruch 1, worin: die Vereinigung von Düse (86) und Kanalmitteln (102) derart ist, daß sich das Düsendruckverhältnis jeweils zwischen Starten und Reiseflug von angenähert 2,0 bis etwa 3,0 ändert.

3. Die Erfindung nach Anspruch 1, worin: die Kanalmittel stromabwärts so enden, daß sie an der Düsenschalloberfläche (108) oder an einer deformierten Version derselben aufhören.

4. Die Erfindung nach Anspruch 1, worin: die Kanalmittel (102) stromabwärts in einer Position in der erwähnten Vereinigung enden, worin bei einem Düsendruckverhältnis von etwa 2,0 genügend Umgebungsluftströmung (110 bis 112) aus den Kanalmitteln (102) stromabwärts so vorhanden ist, daß eine signifikante Strahltriebwerksgeräuschunterdrückung erzeugt wird; und bei einem Düsendruckverhältnis von etwa 3,0 die Umgebungsluftströmung in die Kanalmittel in großem Umfang vermindert oder abgestellt ist.

5. Die Erfindung nach Anspruch 1, worin: die Kanalmittel (102) stromabwärts so enden, daß sie mit Bezug auf die Düse (86) so aufhören, daß die Düsenschalloberfläche (108) die Gesamtheit oder einen Teil des Umfangs des Umgebungsluftaustritts der Kanalmittel schneidet.

6. Die Erfindung nach Anspruch 5, worin: der Umfang des Endes der Kanalmittel, an welchem die Umgebungsluft ausgelassen wird, von einer Form ist, die aus der Gruppe ausgewählt ist, welche aus zylindrisch, divergent und konvergent besteht.

7. Die Erfindung nach Anspruch 1, worin: die stromaufwärtigen offenen Enden der Kanalmittel aus einer porösen Oberfläche ausgebildet sind, die eine Vielzahl von kleinen Öffnungen (166) hat, wobei sich diese poröse Oberfläche längs des Umfangs der Außenwandoberfläche (160) der Düse erstreckt.

8. Die Erfindung nach Anspruch 7, worin: die Öffnungen Luftschlitze (166) sind, deren stromabwärtige Endteile (174) nach einwärts von der äußeren Wandoberfläche gedrückt sind, so daß sich ein minimaler Strömungswiderstand an der Öffnung während des Reiseflugs ergibt.

EP 0 229 855 B1

*Fig. 1*
PRIOR ART

*Fig. 2*
PRIOR ART

*Fig.*3

90

86

88

102

100

94

92

104

*Fig.*4

96

86 90 88 TAKEOFF CONDITIONS

108

114

120

110

104

112

102

92

116

98 96

*Fig.*5

96

CRUISE FLIGHT

90

102 104

124

122

92

126

88

108

98

86

Fig.7

Fig.6

*Fig.12*

164

166

166

174

14

14

170    166    172    160

*Fig.14*    174

*Fig.13*    160

142

140

138

*Fig.8*    140    138    136

138
136
142
136
136    136
138    138
140

*Fig.9*

154
146
156
150
148
144
158
152

*Fig.10*

154
146
150
148
152
158
156

*Fig.11*